**Europäisches Patentamt**

**European Patent Office**

**Office européen des brevets**

(11) Veröffentlichungsnummer: **0 065 070**
A2

(12) **EUROPÄISCHE PATENTANMELDUNG**

(21) Anmeldenummer: 82100859.6

(22) Anmeldetag: 06.02.82

(51) Int. Cl.³: **B 01 D 13/00, B 01 D 31/00**

(30) Priorität: 16.05.81 DE 3119582

(43) Veröffentlichungstag der Anmeldung: 24.11.82
Patentblatt 82/47

(84) Benannte Vertragsstaaten: **AT BE CH DE FR GB IT LI LU NL SE**

(71) Anmelder: **BABCOCK-BSH AKTIENGESELLSCHAFT vormals Büttner-Schilde-Haas AG,**
Parkstrasse 29 Postfach 4 und 6, D-4150 Krefeld 11 (DE)

(72) Erfinder: Heck, Klaus Dieter, Dr. Dipl.-Ing.,
Heinrich-Vogl-Strasse 10, D-8132 Tutzing (DE)
Erfinder: Krause, Wilbert, Am Gipsbruch 9,
D-8100 Garmisch-Partenkirchen (DE)
Erfinder: Schmidtner, Helmut, Unterholzstrasse 2d,
D-8122 Penzberg (DE)
Erfinder: Näher, Gotthilf, Dr. rer. nat.,
Zugspitzstrasse 22, D-8132 Tutzing (DE)
Erfinder: Pahl, Eberhard, Dr. rer. nat., Dr. Pahl-Weg 6,
D-8113 Kochel am See (DE)
Erfinder: Quittek, Christian, Dr.-Ing. Dipl.-Ing.,
Friedrich-Ebert-Strasse 4, D-4150 Krefeld (DE)
Erfinder: Nellessen, Lambert, Kastanienstrasse 114,
D-4150 Krefeld 11 (DE)

(74) Vertreter: Planker, Karl-Josef, Dipl.-Phys., c/o
**BABCOCK-BSH AKTIENGESELLSCHAFT**
Postfach 4 + 6, D-4150 Krefeld 11 (DE)

(54) **Vorrichtung zur Umkehrosmose oder Ultrafiltration.**

(57) Bei einer Vorrichtung zur Umkehrosmose oder Ultrafiltration sind, wie an sich bekannt, mehrere Rohrmodule (2), durch Rohrbögen (3) verbunden, hintereinandergeschaltet. Um die Entleerung einer solchen Vorrichtung zu erleichtern, sind die Rohrmodule (2) – abweichend von der bisher üblichen horizontalen Anordnung – mit durchgehendem Gefälle verlegt. Bei einem bausteinartigen Modulblock, der sich durch besonders kompakte Bauweise auszeichnet, sind die Rohrmodule (2) nach Art eines flachen Wickels auf einem Rahmen (1) angeordnet. Dabei sind mit Vorteil mehrere Züge ähnlich wie die Gänge eines mehrgängigen Gewindes ineinandergeschachtelt.

— 1 —

Krefeld, den 2. Februar 1982
T1 PL/wey  -  K 81/03 EU

BABCOCK-BSH AKTIENGESELLSCHAFT
vormals Büttner-Schilde-Haas AG
Parkstraße 29
4150 Krefeld 11

Vorrichtung zur Umkehrosmose oder Ultrafiltration

Die vorliegende Erfindung betrifft eine Vorrichtung gemäß dem Oberbegriff des Anspruchs 1.

Eine Vorrichtung dieser Gattung ist durch das DE-GM 75 05 931 bekannt. Dabei sind die Rohrmodule waagerecht parallel zueinander in einer Ebene angeordnet und bilden mit den Rohrbögen einen mäanderförmigen Rohrzug. Die horizontale Modullage ist besonders dann nachteilig, wenn am Ende des Behandlungsvorganges die Vorrichtung entleert werden soll. Es werden immer gewisse Flüssigkeitsreste auf der Permeat- und auf der Retentatseite der Module sowie in den Zu- und Ableitungen zurückbleiben.

Der Erfindung liegt die Aufgabe zugrunde, eine Vorrichtung der im Oberbegriff des Anspruchs 1 angegebenen Gattung so zu gestalten, daß in einfacher Weise eine praktisch restlose Entleerung ermöglicht wird.

Diese Aufgabe wird erfindungsgemäß durch das kennzeichnende Merkmal des Anspruchs 1 gelöst. Hierbei können die Rohr-

0065070

module wahlweise entweder in Durchflußrichtung oder entgegengesetzt zur Durchflußrichtung geneigt sein. Wichtig ist nur, daß von der höchsten Stelle bis zur niedrigsten Stelle des durchströmten Systems ein durchgehendes Gefälle besteht, so daß die Flüssigkeit selbsttätig vollständig auslaufen kann.

Eine besonders kompakte Bauweise wird mit dem Merkmal des anspruchs 2 erreicht.

In Anspruch 3 ist der Aufbau einer mechanisch stabilen Baueinheit angegeben.

Das Merkmal des Anspruchs 4 gestattet es, auch bei relativ starkem Gefälle die Rohrmodule eng nebeneinander anzuordnen.

Der Anspruch 5 gibt eine Form der Rohrbögen an, die fertigungstechnisch sehr einfach zu realisieren ist und an den Stoßstellen einen glatten Übergang mit einfachen, kreisförmigen Endflächen ergibt.

Die Zeichnung dient zur Erläuterung der Erfindung anhand von schematisch dargestellten Ausführungsbeispielen.

Fig. 1   zeigt eine Seitenansicht eines sogenannten Modulblocks,

Fig. 2   zeigt eine Ansicht desselben Modulblocks aus einer um 90° gedrehten Richtung,

Fig. 3   zeigt einen Rohrbogen in perspektivischer Darstellung,

Fig. 4   zeigt einen anderen Modulblock in perspektivischer Darstellung,

- 3 -

Fig. 5 zeigt eine mit mehreren Modulblöcken bestückte Anlage.

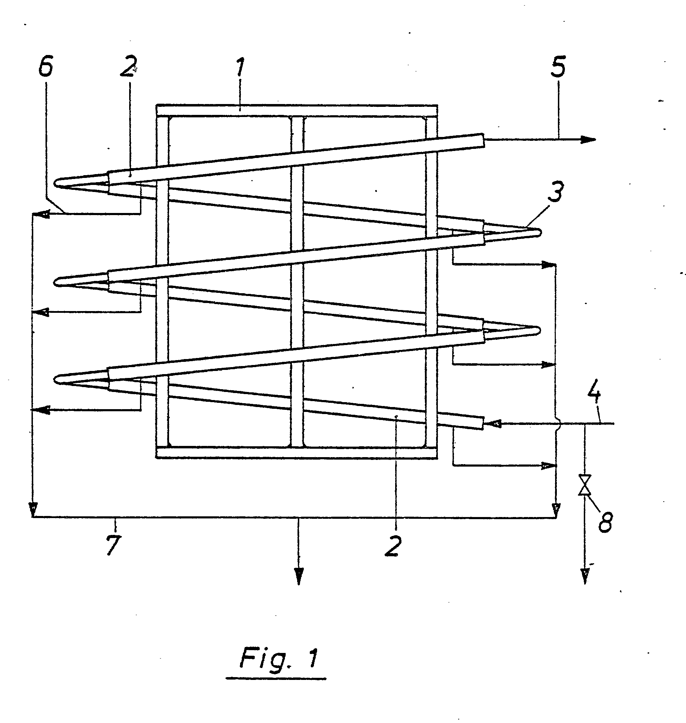

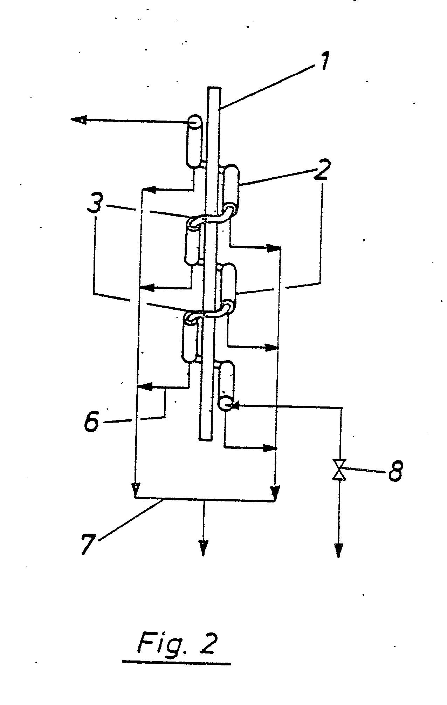

Gemäß Fig. 1 und Fig. 2 sind auf den beiden Seiten eines Rahmens 1, d.h. in zwei eng benachbarten parallelen Ebenen, jeweils mehrere parallele Rohrmodule 2 angeordnet, die mit nicht dargestellten, handelsüblichen Befestigungsmitteln mit dem Rahmen 1 verbunden sind. Die in Fig. 1 auf der Vorderseite des Rahmens 1 liegenden Rohrmodule 2 haben ein leichtes Gefälle von rechts nach links. Die auf der Hinterseite liegenden Rohrmodule haben ein gleich großen Gefälle von links nach rechts. Der Deutlichkeit halber ist das Gefälle in der Zeichnung übertrieben groß dargestellt. Dementsprechen ist auch der Abstand zwischen je zwei benachbarten Rohrmodulen 2 in der Zeichnung größer, als es der Wirklichkeit entspricht. In der Praxis genügt meistens ein wesentlich geringeres Gefälle, das im Prinzip in der Größenordnung von einem Prozent liegen kann. Dementsprechend können die Rohrmodule wesentlich dichter verlegt werden als in Fig. 1 dargestellt.

Jeder Rohrmodul 2 besteht z.B., wie aus dem genannten Gebrauchsmuster bekannt, aus einer schlauchförmigen semipermeablen Membran, einem die Membran umgebenden Druckrohr, dessen Wandung infolge porösen Aufbaues oder mittels feiner Bohrungen flüssigkeitsdurchlässig ist, und einem das Druckrohr mit Abstand umschließenden Mantelrohr. Natürlich können auch Rohrmodule anderer Bauart verwendet werden, z.B. auch solche, bei denen ein einziges Mantelrohr mehrere bündelartig angeordnete Membranen umschließt.

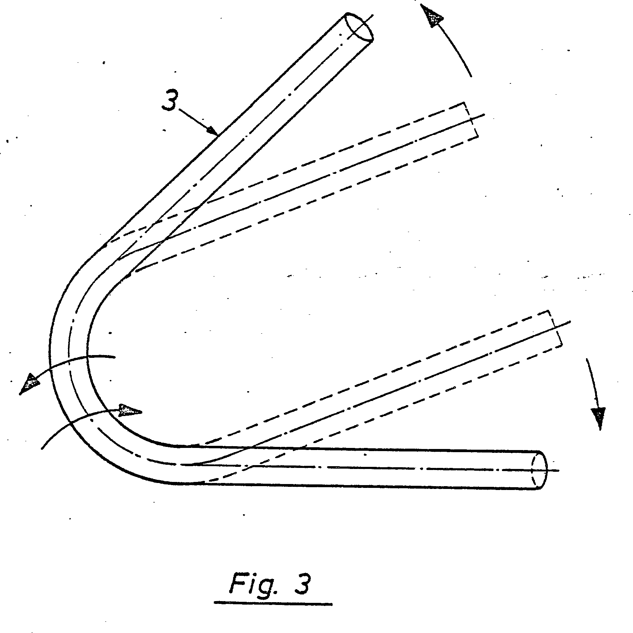

Korrespondierende Enden der Rohrmodule 2 sind durch Rohrbögen 3 miteinander verbunden, so daß ein durchgehender Rohrzug gebildet wird, der sozusagen auf dem Rahmen 1 aufgewickelt ist. Die Rohrbögen 3 werden in der Weise hergestellt, daß man ein U-förmiges Rohr im Scheitelbereich tordiert, so daß die beiden Schenkel aus der ursprünglichen gemeinsamen Ebene nach oben bzw. nach unten herausgedreht werden, wie in Fig. 3 veranschaulicht. Die Achsen

der beiden Schenkel schließen mit der Horizontalen einen Winkel ein, der genau dem Gefälle der Rohrmodule 2 entspricht. Die Rohrbögen 3 sind mit herkömmlichen Verbindungselementen, wie z.B. in dem eingangs genannten Gebrauchsmuster beschrieben, lösbar an die Rohrmodule 2 angeschlossen.

Im Normalbetrieb tritt die Rohflüssigkeit unter Druck gemäß Pfeil 4 von unten in das System ein. Das Retentat tritt bei 5 aus. Das Permeat wird bei diesem einzelnen Rohrmodul 2 in der Nähe seines tieferliegenden Endes durch die Anschlußrohre 6 abgeleitet. Es fließt über eine Sammelleitung 7 einem nicht dargestellten Behälter zu.

Die Entleerung erfordert auf der Permeatseite keine besonderen Maßnahmen. Infolge des Gefälles läuft das beim Abschalten der Rohflüssigkeitszufuhr im System befindliche Permeat weiter über die Anschlußrohre 6 ab. Auf der Retentatseite erfolgt die Entleerung durch Öffnen des Ventils 8.

Eine selbsttätige Entleerung ist in entsprechender Weise auch möglich, wenn im Normalbetrieb mit umgekehrter Durchflußrichtung gearbeitet wird, d.h. wenn der Zufluß für die Rohrflüssigkeit oben angeschlossen ist und das Rententat an der tiefsten Stelle austritt.

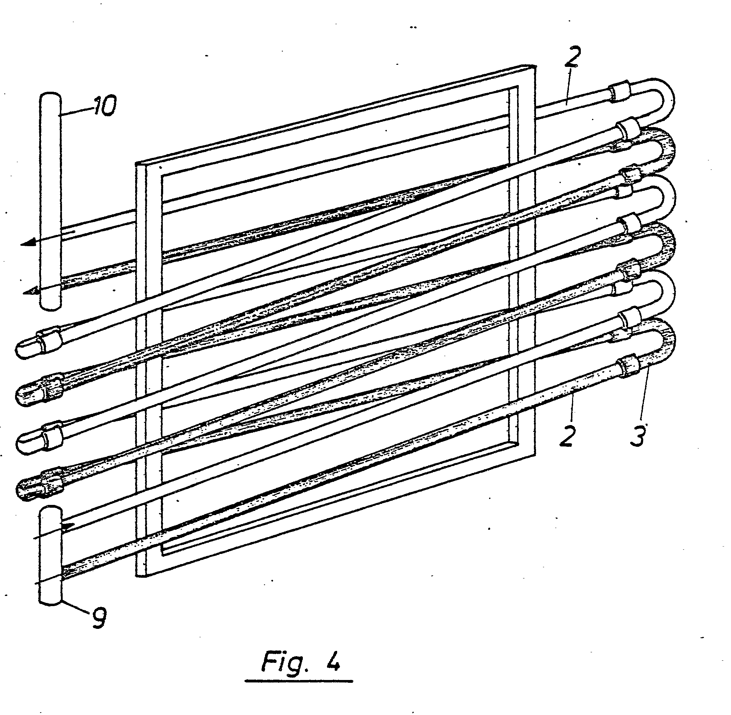

Bei dem in Fig. 4 dargestellten Ausführungsbeispiel sind zwei Rohrzüge parallel geschaltet. Jeder dieser beiden Rohrzüge besteht aus Rohrmodulen 2 und Rohrbögen 3 und entspricht grundsätzlich der in den Fig. 1 und 2 dargestellten Anordnung.

Die beiden parallel geschalteten Rohrzüge sind nach Art eines zweigängigen Gewindes ineiander geschachtelt. Die eingangs- und ausgangsseitigen Enden sind gemeinsam an ein Verteilerrohr 9 bzw. ein Sammelrohr 10 angeschlossen.

Die Anschlüsse zum Abziehen des Permeates sind in Fig. 4 der Übersichtlichkeit halber nicht eingezeichnet worden. Ferner hat sich der Zeichner aus den gleichen Gründen auf die Darstellung einer zweigängigen Anordnung beschränkt. In der Praxis werden in der Regel mehr als zwei Kanäle parallel geschaltet. Als besonders vorteilhaft hat sich eine viergängige Anordnung erwiesen. Bei dieser Anordnung ergibt sich natürlich ein erheblich steileres Gefälle.

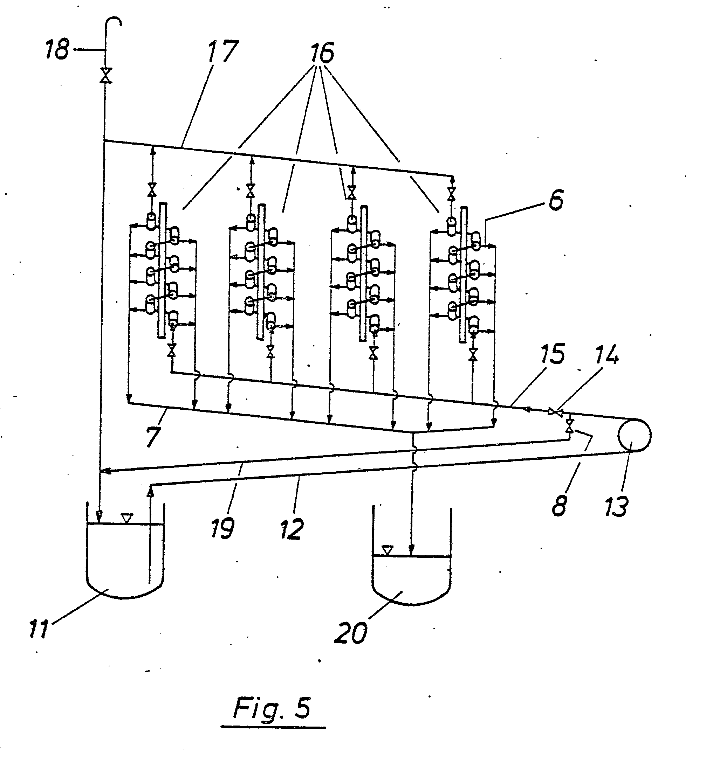

Die in den Fig. 1 und 2 bzw. in Fig. 4 dargestellten Modulblöcke können nach dem Baukastenprinzip in an sich bekannter Weise in beliebiger Anzahl parallel oder in Reihe geschaltet werden. Eine aus vier parallel geschalteten Modulblöcken bestehende Anlage ist in Fig. 5 schematisch dargestellt. Dabei wird die Rohflüssigkeit aus einem Vorlagebehälter 11 über eine Zuleitung 12 mittels einer Pumpe 13 über ein Druckregelventil 14 in ein Verteilerrohr 15 gedrückt. Daran sind die vier Modulblöcke 16 angeschlossen. Die retentatseitigen Ausgänge sind gemeinsam an einer Sammelleitung 17 angeschlossen, die zu dem Vorlagebehälter 11 zurückgeführt ist. Die Sammelleitung 17 ist an ihrer höchsten Stelle mit einem Entlüftungsrohr 18 versehen. Vor dem Eingang des ersten Modulblocks ist an dem Verteilerrohr 15 ein Entleerungsrohr 19 angeschlossen, das ebenfalls zu dem Vorlagebehälter 1 zurückgeführt ist. Das Permeat gelangt über die Anschlüsse 6 und die Sammelleitung 7 zu dem Permeatbehälter 20. Es versteht sich und ist aus Fig. 5 deutlich zu erkennen, daß alle Rohrleitungen, insbesondere die Zuleitung 12, das Verteilerrohr 15, das Sammelrohr 17 und die Sammelleitung 7 mit Gefälle verlegt sind. Daher besteht sowohl retentatseitig als auch permeatseitig ein durchgehendes Gefälle nicht nur in den Modulblöcken selbst, sondern auch in den zugehörigen Anschluß- und Verbindungsleitungen. Das Gefälle erleichtert nicht nur die Entleerung, sondern bei der gewählten Strömungsrichtung auch die beim Anfahren der Anlage erforderliche Entlüftung.

Patentansprüche:

Krefeld, den 2. Februar 1982
T1 PL/wey  -  K 81/03 EU

BABCOCK-BSH AKTIENGESELLSCHAFT
vormals Büttner-Schilde-Haas AG
Parkstraße 29
4150 Krefeld 11

Patentansprüche:

1. Vorrichtung zur Umkehrosmose oder Ultrafiltration mit mehreren in Reihe geschalteten Rohrmodulen, wobei jeweils aufeinander folgende Rohrmodule durch Rohrbögen miteinander verbunden sind, dadurch gekennzeichnet, daß die Rohrmodule (2) mit Gefälle angeordnet sind.

2. Vorrichtung nach Anspruch 1, dadurch gekennzeichnet, daß die Rohrmodule (2) in zwei parallelen Ebenen jeweils parallel angeordnet sind und zusammen mit den Rohrbögen (3) einen wickelförmigen Rohrzug bilden.

3. Vorrichtung nach Anspruch 2, dadurch gekennzeichnet, daß die Rohrmodule (2) auf den beiden Seiten eines Rahmens (1) befestigt sind.

4. Vorrichtung nach Anspruch 2 oder 3, dadurch gekennzeichnet, daß mindestens zwei je aus mehreren hintereinander geschalteten Rohrmodulen (2) bestehende Rohrzüge nach Art eines mehrgängigen Gewindes ineinander geschachtelt sind.

5. Vorrichtung nach Anspruch 2 bis 4, dadurch gekennzeichnet, daß die Schenkel der Rohrbögen (3) durch Torsion im Scheitelbereich dem Gefälle der Rohrmodule (2) angepaßt sind.

- - -

Fig. 1

*Fig. 2*

3

Fig. 3

0065070

*Fig. 4*

5|5

Fig. 5